# EUROPEAN PATENT APPLICATION

(11) **EP 3 605 033 A1**
(43) Date of publication of application: **05.02.2020**
(21) Application number: 19188559.9
(22) Date of filing: 26.07.2019
(51) Int. Cl.: G01F 23/72, B65B 9/10, G01D 5/22

(54) **SENSOR AND METHOD FOR DETECTING THE LEVEL OF A POURABLE PRODUCT INSIDE A TUBE OF PACKAGING MATERIAL**

(30) Priority: 31.07.2018 EP 18186615
(71) Applicant: Tetra Laval Holdings & Finance S.A., 1009 Pully (CH)
(72) Inventor: MEDICI, Federica, 41122 Modena (IT)
(74) Representative: Tetra Pak - Patent Attorneys SE

(57) **Abstract**

There is described a sensor (10, 10') for detecting the level of a pourable food product inside a tube (3) of packaging material, comprising: a floater (7) adapted to float on the pourable food product inside tube (3); a first excitation electric circuit (12) actuatable to generate a magnetic field (B); a magnetic field flux concentrator element (11) coupled to the floater (7) and adapted to concentrate the magnetic field (B); and a second electric circuit (13), which is magnetically coupled with the magnetic field (B) and is adapted to be subjected to an induced voltage caused by a time variation of a magnetic flow determined by the magnetic field (B) and associated to the level of the pourable food product.

## Description

The present invention relates to a sensor and to a method for detecting the level of a pourable product inside a tube of packaging material.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or of mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH), which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is filled continuously downwards with the sterilized or sterile-processed food product by means of a filling pipe, and is sealed and then cut along equally spaced cross sections to form pillow packs, which are then fed to a folding unit to form the finished, e.g. substantially parallelepiped-shaped packages.

The known packaging machines comprise a sensor for detecting the filling level of the pourable product inside the tube.

According to a known solution, the sensor comprises:
- a floater, which floats in the pourable product and is provided with a magnetic element, e.g. a permanent magnet; and
- a magnetic reader, which is carried by a stationary part of the packaging machine, is magnetically coupled with the magnetic element of the floater and is exposed to a magnetic flux depending on the position of the floater inside the tube of packaging material and, therefore, on the level of the pourable product.

A need is felt within the industry to devise an alternative solution to reliably and promptly detect the level of the pourable product inside the packaging material.

It is an object of the present invention to provide a sensor for detecting the level of a pourable product inside a tube of packaging material, designed to meet the above-identified requirement.

According to the present invention, there is provided a sensor for detecting the level of a pourable product inside a tube of packaging material, as claimed in claim 1.

According to the present invention, there is also provided a method for detecting the level of a pourable product inside a tube of packaging material, as claimed in claim 14.

Two preferred, non-limiting embodiments of the present invention will be described by way of example with reference to the accompanying drawings, in which:
- Figure 1 schematically shows a packaging machine for forming a plurality of sealed packages from a tube of packaging material into which a first embodiment of a sensor in accordance with the present invention is incorporated, with parts removed for clarity;
- Figure 2 is a schematic view of the sensor of Figure 1 in two operative conditions associated to respective levels of the food product inside the tube of packaging material;
- Figure 3 shows in an enlarged scale some components of the sensor of Figures 1 and 2;
- Figure 4 shows in a further enlarged scale one component of the sensor of Figures 1 to 3;
- Figure 5 shows a plot of a first voltage and a second voltage against time used for determining the level of the pourable product by the sensor of Figures 1 to 4, in a condition in which such level reaches a first value;
- Figure 6 shows a plot of the sum of the first voltage and the second voltage of Figure 5 against time, in the condition in which such level reaches the first value;
- Figure 7 shows a plot of the first voltage and the second voltage against time, in a condition in which such level reaches a second value;
- Figure 8 shows a plot of the sum of the first voltage and the second voltage of Figure 7 against time, in the condition in which such level reaches the second value;
- Figure 9 shows a plot of the difference between the root mean square of the first voltage and the root mean square of the second voltage of Figures 5 and 7 against the level of the pourable product;
- Figure 10 a schematic view of the second embodiment of the sensor of Figure 1 in two operative conditions associated to respective levels of the food product inside the tube of packaging material;
- Figure 11 show a plot of a first voltage and a second voltage against time used for determining the level of the pourable product by the sensor of Figures 10, in a condition in which such level reaches a first value;
- Figure 12 shows a plot of the sum of the first voltage and the second voltage of Figure 11 against time, in the condition in which such level reaches the first value;
- Figure 13 shows a plot of the first voltage and the second voltage against time, in a condition in which such level reaches a second value;
- Figure 14 shows a plot of the sum of the first voltage and the second voltage of Figure 13 against time, in the condition in which such level reaches the second value.

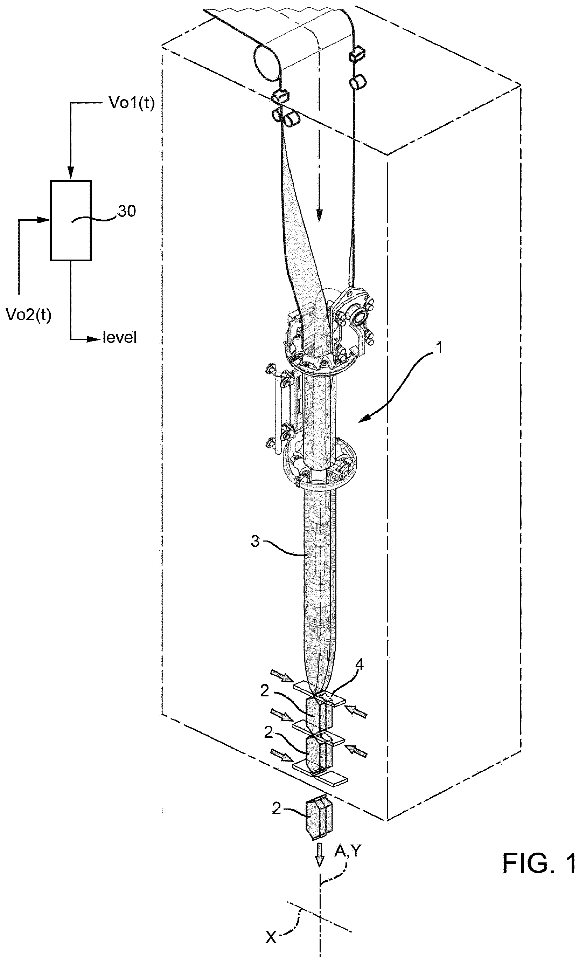

Number 1 in Figures 1 to 3 indicates as a whole a packaging machine (not completely shown) for continuously producing sealed packages of a pourable food product, such as pasteurized or UHT milk, fruit juice, wine, etc., from a known tube 3 of packaging material (not shown).

Tube 3 is formed inside machine 1 by longitudinally folding and sealing a known web (not shown) of heat-seal sheet material, which may comprise a base layer for stiffness and strength, which may be formed by a layer of fibrous material, e.g. paper, or of mineral-filled polypropylene material, and a number of layers of heat-seal plastic material, e.g. polyethylene film, covering both sides of the base layer. In the case of an aseptic package for long-storage products, such as UHT milk, the packaging material may also comprise a layer of gas- and light-barrier material, e.g. an aluminium foil or an ethyl vinyl alcohol (EVOH) foil, which is superimposed on a layer of heat-seal plastic material, and is in turn covered with another layer of heat-seal plastic material forming the inner face of the package eventually contacting the food product.

Tube 3 of packaging material is then filled with the food product for packaging. Furthermore, packaging machine 1 comprises forming means 4 (only schematically shown in Figure 1) to seal and cut along equally spaced cross sections to form a number of pillow packs 2, which are then transferred to a folding unit (not shown) where they are folded mechanically to form respective packages.

In particular, tube 3 has an axis A parallel to a direction Y, which is vertical in the embodiment shown.

Packaging machine 1 further comprises a filling pipe 8, which extends inside tube 3 mainly parallel to direction Y and conveys the pourable product from a not-shown tank inside tube 3.

Pipe 8 comprises a filling mouth arranged, in use, below the level of the pourable product inside tube 3.

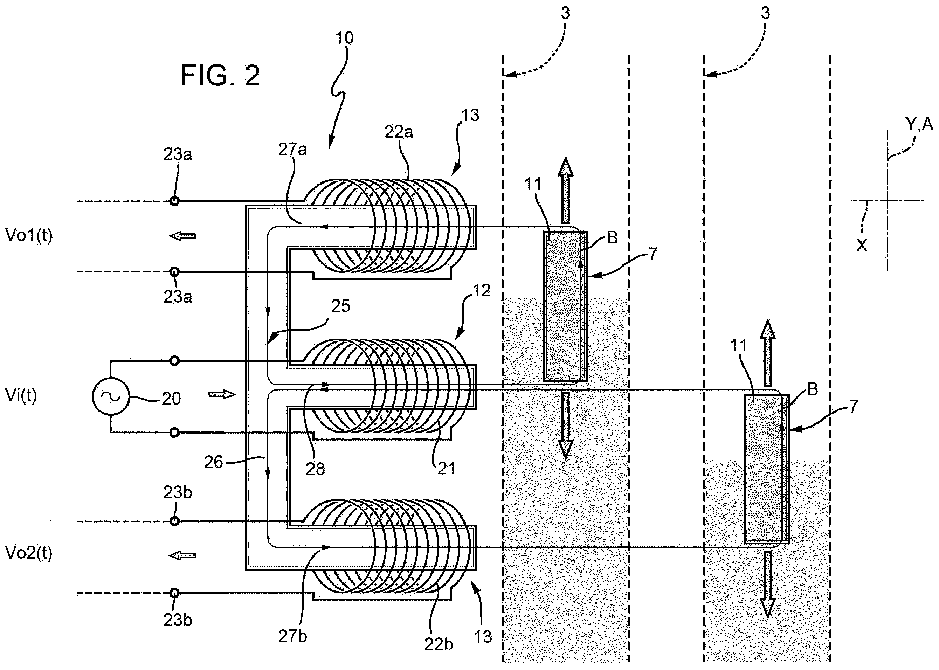

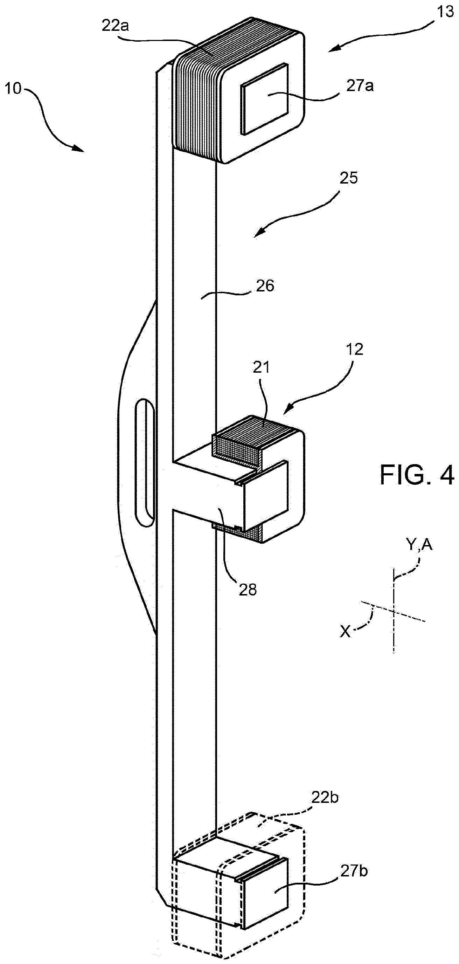

Packaging machine 1 comprises a sensor 10 for detecting the level of the pourable food product inside tube 3 (Figures 2 to 4).

In greater detail, sensor 10 comprises a floater 7, which floats on the pourable food product inside tube 3.

The position of floater 7 along direction Y is therefore determined by the level of the pourable food product inside tube 3.

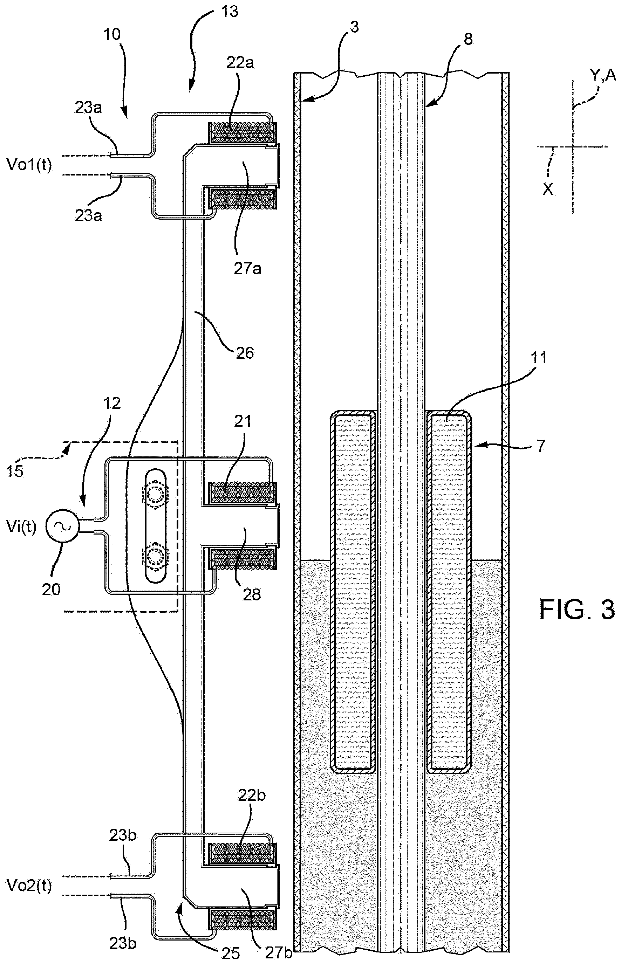

In the embodiment shown, floater 7 is shaped as a cylinder having an axis parallel to axis A and direction Y (Figures 2 and 3).

Furthermore, floater 7 is hollow and is coaxially passed through by pipe 8.

Advantageously, sensor 10 comprises:
- an excitation electric circuit 12 adapted to generate a magnetic field B;
- a magnetic field flux concentrator element 11, which is fitted to floater 7 and is adapted to concentrate the magnetic field B generated by excitation electric circuit 12; and
- an electric circuit 13, which is magnetically coupled with the magnetic field generated by electric circuit 12 and concentrated by magnetic field flux concentrator element 11, and is subjected to an induced voltage caused by a time variation of a magnetic flow determined by magnetic field B and passing through electric circuit 13.

In particular, magnetic field flux concentrator element 11 is embedded inside floater 7.

Excitation electric circuit 12 comprises an electric generator 20, which is an alternate electric current generator. The voltage applied by generator 20 is indicated as Vi(t) in Figure 2.

The operation of electric generator 20 causes the flow of an electric current inside excitation electric circuit 12.

The electric current flowing through excitation electric circuit 12 generates the magnetic field B, which is concentrated by magnetic field flux concentrator element 11 in the region occupied by magnetic field flux concentrator element 11 itself.

Magnetic field B generates a time-variable magnetic flow passing through electric circuit 13. Accordingly, an induced voltage is magnetically induced on electric circuit 13, on the basis of the position of magnetic field flux concentrator element 11 and, therefore, of the level of pourable product inside tube 3.

It is important to stress that the expression "magnetic field flux concentrator element" is used in the present description to indicate an element which has not an own magnetization, but concentrates the field lines of magnetic field B. In other words, the intensity of magnetic field B is higher in the region of the space occupied by magnetic field flux concentrator element 11.

In particular, magnetic field flux concentrator element 11 has a magnetic permeability different from 1.

In the embodiment shown, magnetic field flux concentrator element 11 is made of a ferromagnetic material.

Excitation electric circuit 12 comprises a coil 21.

Preferably, electric circuit 13 comprises at least two coils 22a, 22b staggered along direction Y and each comprising a pair of terminals 23a, 23b.

The induced voltage against time at terminals 23a, 23b is indicated as Vo1(t), Vo2(t) respectively in the following of the present description.

In particular, the expression "induced voltage" is used in the present description to indicate the difference between the electric voltages at terminals 23a, 23b.

Coil 21 is interposed between coils 22a, 22b along direction Y.

In the embodiment shown, coil 22a is arranged above coil 22b.

In this way, when floater 7 is raised along direction Y, magnetic flux passing through coil 22a and voltage Vo1(t) are increased whereas magnetic flux passing through coil 22b and voltage Vo2(t) are decreased.

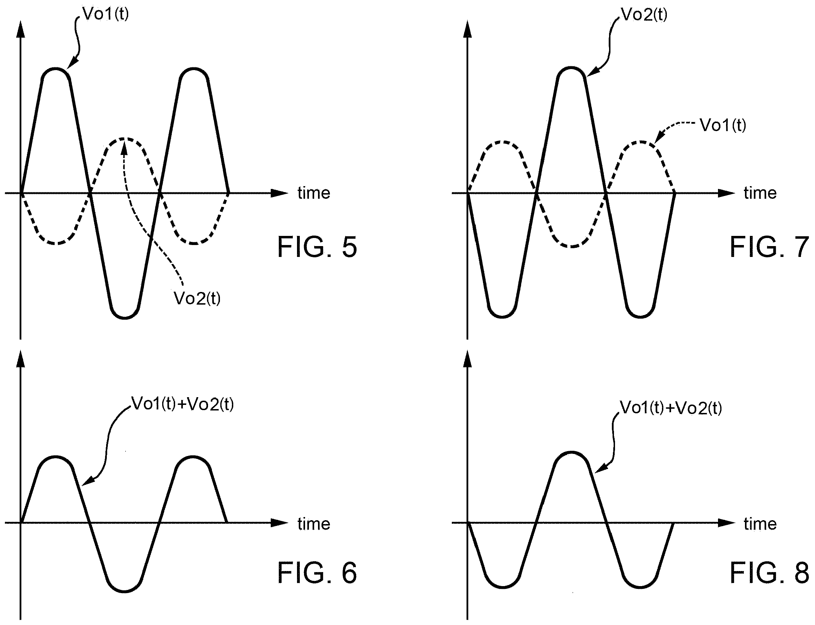

This is due to the fact that when floater 7 is raised along direction Y, magnetic field flux concentrator element 11 approaches coil 22a and moves away from coil 22b along direction Y, thus concentrating magnetic field B in the area of coil 22a and accordingly increasing magnetic flow passing through coil 22a and reducing magnetic flow passing through coil 22b (left side of Figure 2 and Figure 5).

On the contrary, when floater 7 is lowered along direction Y, the amplitude of magnetic flux passing through coil 22a and of voltage Vo1(t) are decreased whereas the amplitude of magnetic flux passing through coil 22b and voltage Vo2(t) are increased.

This is due to the fact that when floater 7 is lowered along direction Y, magnetic field flux concentrator element 11 approaches coil 22b and moves away from coil 22a along direction Y, thus concentrating magnetic field B in the area of coil 22b and accordingly increasing magnetic flow passing through coil 22b and reducing magnetic flow passing through coil 22a (right side of Figure 2 and Figure 7).

In the embodiment shown, sensor 10 comprises a single frame 25, which is fitted to a fixed support structure 15 (only schematically shown in Figure 3) of the packaging machine 1. Frame 25 supports coils 21, 22a, 22b.

In particular, frame 25 is E-shaped and comprises, in turn:
- a leg 26;
- a pair of legs 27a, 27b which protrude from opposite axial ends of leg 26 and support respective coils 22a, 22b; and
- a leg 28, which protrude from leg 26, is interposed between legs 27 and supports coil 21.

In particular, legs 27a, 27b, 28 extend parallel to a direction X orthogonal to direction Y and horizontal in the embodiment shown.

Leg 26 extends parallel to direction Y.

Direction X is orthogonal to direction Y and lies in the same plane of frame 25 in the embodiment shown.

Leg 28 is interposed along direction Y between legs 27.

In the embodiment shown, coils 21, 22a, 22b are wound on respective legs 28, 27a, 27b parallel to direction X.

Sensor 10 comprises a control unit 30 (only schematically shown in Figure 1), which is programmed for calculating the level of the pourable food product along direction Y, on the basis of induced voltages Vo1(t), Vo2(t).

Still more precisely, in case electric generator 20 is an alternate sinusoidal electric current generator, magnetic field B, magnetic flow and induced voltages Vo1(t), Vo2(t) are sinusoidal.

In this case, control unit 30 is programmed to calculate the level of the pourable product, on the basis of a significative quantity associated to the signal formed by the combination of induced voltages Vo1(t), Vo2 (t) .

In the embodiment shown in Figures 5 to 8, control unit 30 is programmed for calculating the level of the pourable product, on the basis of the root mean square value Vrms (Vo1(t)+Vo2(t)).

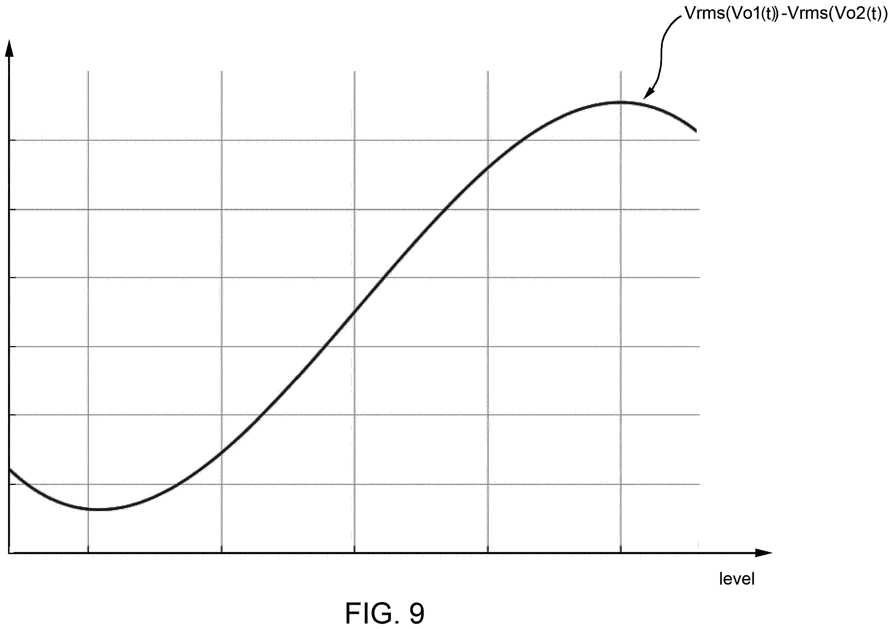

In the preferred embodiment shown in Figure 9, control unit 30 is programmed for calculating the level of the pourable product, on the basis of the difference between the root mean square of the first voltage and the root mean square of the second voltage Vrms((Vo1(t))-Vrms(Vo2(t)).

Alternatively, control unit 30 calculates the level of the pourable food product, on the basis of the value Vrms(Vo1(t)-Vo2(t)).

Alternatively, control the level of the pourable food product, on the basis of the value of the difference between the peak to peak difference of Vo1(t) and the peak to peak difference of Vo2(t).

In use, tube 3 is advanced along direction Y inside packaging machine 1, is filled with pourable product by pipe 8, and is sealed and cut along equally spaced cross sections to form a number of pillow packs, which are then transferred to unit 1 where they are folded mechanically to form respective packages.

In particular, the filling mouth of pipe 8 is arranged below the level of the pourable product.

Sensor 10 detects the level of the pourable product inside tube 3.

In greater detail, electrical generator 20 generates an alternate sinusoidal voltage Vi(t), which causes sinusoidal alternate magnetic field B.

Magnetic field B is concentrated by magnetic field flux concentrator element 11 of floater 7 in the area of the level of the pourable product, instead of being scattered in the air.

Sinusoidal time-variable magnetic field B generates a sinusoidal time-variable magnetic flow, which passes through coils 22a, 22b of electric circuit 13.

Accordingly, sinusoidal time-variable voltage Vo1(t), Vo2(t) are induced according to Faraday's law.

The root mean square value of voltages Vo1(t), Vo2(t) depend on the level of the pourable food product.

In particular, in case the level of the pourable food product corresponds to the positon of coil 21 along direction Y, the root mean square value of voltages Vo1(t), Vo2(t) are substantially identical.

This is due to the fact that coil 21 is equi-spaced from coils 22a, 22b along direction Y.

In case the level of the pourable food product raises along direction Y with respect to the position of coil 21, the root mean square of voltages Vo1(t) increases and the root mean square of voltage Vo2 (t) decreases (Figure 5).

Thus, the plot of the sum Vo1(t)+Vo2(t) against time (Figure 6) and the corresponding root mean square value are different from the same sum against the time and the corresponding root mean square in case the level of the pourable food product corresponds to the positon of coil 21 along direction Y.

Conversely, in case the level of the pourable food product decreases along direction Y with respect to the position of coil 21, the root mean square value of voltage Vo1(t) induced on coil 22a decreases and the root mean square value of voltage Vo2(t) induced on coil 22b increases (Figure 7).

Thus, the sum Vo1(t)+Vo2(t) against time (Figure 8) and the corresponding root mean square value are different from the same sum against the time and the corresponding root mean square in case the level of the pourable food product corresponds to the positon of coil 21 along direction Y or the level of the pourable food product raises along direction Y with respect to the position of coil 21.

In a preferred embodiment, control unit 30 calculates the level of the pourable food product, on the basis of Vrms(Vo1(t))-Vrms(Vo2(t)) (Figure 9).

In particular, control unit 30 is programmed to associate at each value of the root mean square value Vrms(Vo1(t))-Vrms(Vo2(t)) a value of the level of the food product inside tube 3 (Figure 9).

Alternatively, control unit 30 calculates the level of the pourable food product, on the basis of the root mean square value Vrms (Vo1(t)+Vo2(t)).

Alternatively, control unit 30 calculates the level of the pourable food product, on the basis of the value Vrms (Vo1(t)-(Vo2(t)).

Alternatively, control the level of the pourable food product, on the basis of the value of the difference between the peak to peak difference of Vo1(t) and the peak to peak difference of Vo2(t).

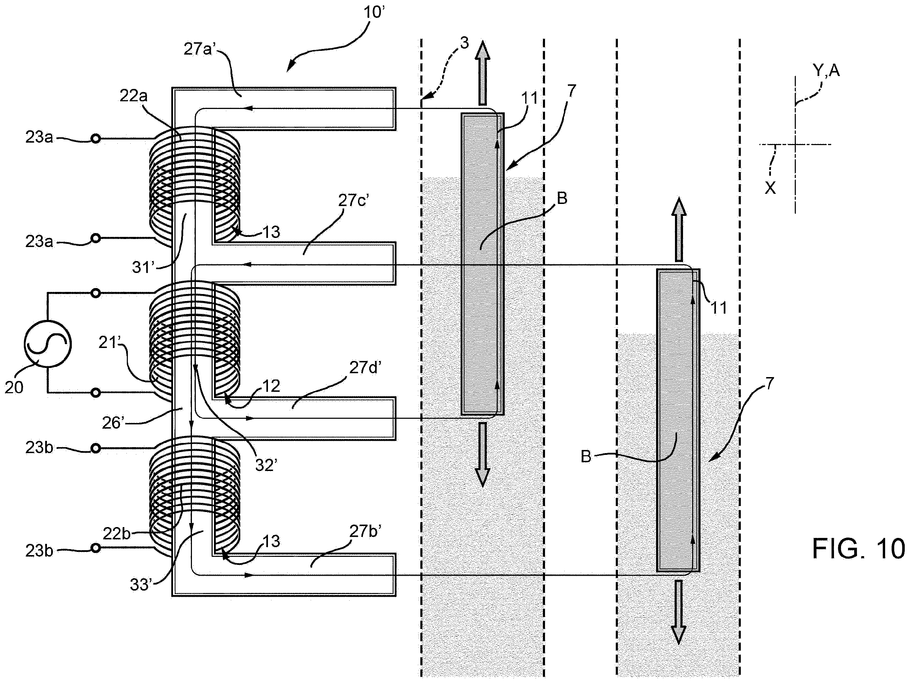

Reference number 10' in Figure 10 indicates a sensor according to a second embodiment of the present invention; sensor 10, 10' are similar to each other, the following description is limited to the differences between them, and using the same references, where possible, for identical or corresponding parts.

In particular, sensor 10' differs from sensor 10 for comprising four legs 27a', 27b', 27c', 27d' which protrude from leg 26'.

Legs 27a', 27b', 27c', 27d' extend parallel to direction X, horizontal in the embodiment shown.

Legs 27a', 27b' protrude from opposite axial ends of leg 26.

Legs 27c', 27d' protrude from legs 26 and are interposed between legs 27a', 27b' parallel to direction Y.

Still more precisely, leg 27c' is interposed between legs 27a', 27d' parallel to direction Y, and leg 27d' is interposed between legs 27c', 27b' parallel to direction Y.

In particular, legs 27a', 27b', 27c', 27d' are parallel to one another and equi-spaced parallel to direction Y.

Leg 26' comprises, in turn, proceeding from leg 27a' to leg 27b' parallel to direction Y:
- a portion 31' interposed between legs 27a', 27c' parallel to direction Y;
- a portion 32' interposed between legs 27c', 27d' parallel to direction Y; and
- a portion 33' interposed between legs 27d', 27b' parallel to direction Y.

Furthermore, sensor 10' differs from sensor 10 in that:
- coil 21' of excitation electric circuit 12 is wound on portion 32' parallel to direction Y; and
- coils 22a', 22b' of electric circuit 13 are wound on respective portions 31', 33' parallel to direction Y.

The operation of sensor 10' is substantially identical to sensor 10 and is therefore not descried in detail.

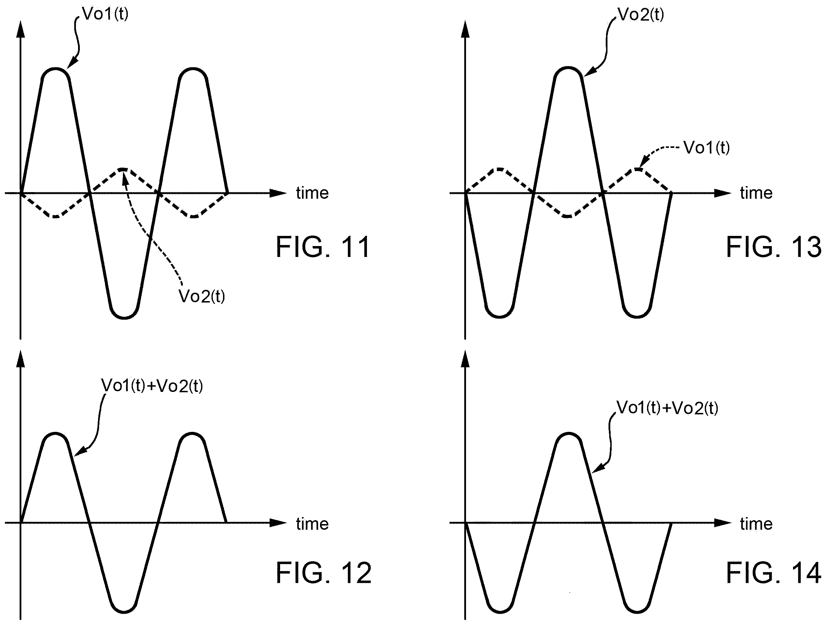

In particular, in the very same way as of sensor 10, when floater 7 is raised along direction Y, magnetic flux passing through coil 22a' and voltage Vo1(t) are increased whereas magnetic flux passing through coil 22b' and voltage Vo2(t) are decreased (Figures 11).

This is due to the fact that when floater 7 is raised along direction Y, magnetic field flux concentrator element 11 approaches coil 22a' and moves away from coil 22b' along direction Y, thus concentrating magnetic field B in the area of coil 22a' and accordingly increasing magnetic flow passing through coil 22a' and reducing magnetic flow passing through coil 22b'.

On the contrary, when floater 7 is lowered along direction Y, the magnetic flux passing through coil 22a' and the voltage Vo1(t) are decreased whereas the magnetic flux passing through coil 22b' and voltage Vo2(t) are increased (Figure 13).

This is due to the fact that when floater 7 is lowered along direction Y, magnetic field flux concentrator element 11 approaches coil 22b' and moves away from coil 22a along direction Y, thus concentrating magnetic field B in the area of coil 22b' and accordingly increasing magnetic flow passing through coil 22b' and reducing magnetic flow passing through coil 22a'.

The advantages of sensor 10, 10' and of the method according to the present invention will be clear from the foregoing description.

In particular, sensor 10, 10' allows to reliably and promptly detect the variation of the level of the pourable food product inside tube 3.

As a matter of fact, any variation of this level causes a corresponding variation of the magnetic flow passing through coils 22a and 22b (22a' and 22b') and, therefore, of value Vrms(Vo1(t)) - Vrms(Vo2(t)) or Vrms (Vo1(t)+Vo2(t)).

Furthermore, the amplitude of voltage Vo1(t) and Vo2(t) can be increased simply by increasing the magnetic permeability of magnetic field flux concentrator element 11.

Furthermore, coil 21, 21' of excitation circuit 12 is interposed along direction Y between coils 22a, 22b; 22a', 22b' of electrical circuit 13.

In this way, the increase (decrease) in the level of the pourable product increases (decreases) the root mean square value of voltage Vo1(t) and decreases (increases) the root mean square value of voltage Vo2(t).

The sensitivity of sensor 10, 10' relative to the level variation is therefore enhanced. As a matter of fact, the more the level variation, the more the value of Vrms (Vo1(t))-Vrms(Vo2(t)) .

Clearly, changes may be made to sensor 10, 10' and to the method without, however, departing from the protective scope defined in the accompanying claims.

In particular, electric circuit 13 could comprise only one coil 22a, 22b.

Alternatively, electrical circuit 13 could comprise more than two coils 22a, 22b; 22a', 22b' so as to correspondingly increase the discretization of the calculated level of the pourable food product inside tube 3.

## Claims

1. A sensor (10, 10') for detecting the level of a pourable food product inside a tube (3) of packaging material, comprising:
- a floater (7) adapted to float on said pourable food product inside said tube (3);
**characterized by** comprising:
- a first excitation electric circuit (12) actuatable to generate a magnetic field (B);
- a magnetic field flux concentrator element (11) coupled to said floater (7) and adapted to concentrate, in use, said magnetic field (B); and
- a second electric circuit (13), which is magnetically coupled with said magnetic field (B) and is adapted to be subjected to an induced voltage (Vo1(t), Vo2(t)) caused by a time variation of a magnetic flow determined by said magnetic field (B) and associated to said level.

2. The sensor of claim 1, **characterized in that** said second electric circuit (13) comprises at least two electrically conductive coils (22a, 22b; 22a', 22b') spaced apart from one another along a first direction (Y); said floater (7) being movable along said first direction (Y) as a result of the variation of said level;
said first electrically conductive coil (22a; 22a') and said second electrically conductive coil (22b; 22b') being electrically distinct from one another and being subjected, in use, respectively to a first said induced voltage (Vo1(t)) and to a second said induced voltage (Vo2(t)) caused by said time variation of said magnetic flow passing through said first electrically conductive coil (22a) and second electrically conductive coil (22b).

3. The sensor of claim 2, **characterized in that** said first excitation circuit (12) is interposed between said first electrically conductive coil and said second electrically conductive coil (22a, 22b; 22a', 22b') along said first direction (Y).

4. The sensor of claim 3, **characterized in that** said first excitation circuit (12) is equi-spaced between said first electrically conductive coil and said second electrically conductive coil (22a, 22b; 22a', 22b') along said first direction (Y).

5. The sensor of any one of claims 2 to 4, **characterized in that** by comprising a E-shaped element (25), which comprises, in turn:
- a first end arm (27a) and a second end arm (27b) carrying respectively said first electrically conductive coil (22a) and said second electrically conductive coil (22b);
- a third arm (28), which is interposed between said first end arm and said second end arm (27a, 27b) along said first direction (Y) and which carries said first excitation electric circuit (12).

6. The sensor of claim 5, **characterized in that** said first electrically conductive coil (22a) and said second electrically conductive coil (22b) are wound parallel to a second direction (X) transversal to said first direction (Y) and coplanar to said element (25); and/or **characterized in that** said first excitation circuit (12) comprises a third electrically conductive coil (21) wound parallel to said second direction (X).

7. The sensor of any one of claims 2 to 4, **characterized in that** by comprising an element (25'), which comprises, in turn:
- a main arm (26) which extends parallel to said first direction (Y);
- a further first end arm (27a') and a further second end arm (27b'), which protrude from said main arm (26) parallel to said second direction (X); and
- a further third end arm (27c') and a fourth arm (27d') which are interposed between said further first end arm (27a') and said further second end arm (27b') parallel to said first direction (Y) and which protrude from said main arm (26) parallel to said second direction (X);
said first electrically conductive coil (22a) being interposed between said further first end arm (27a') and said further third arm (27c') along said first direction (Y);
said second electrically conductive coil (22b) being interposed between said fourth end arm (27d') and said further second end arm (27b') along said first direction (Y);
said first excitation electric circuit (12) being interposed between said further third end arm (27c') and said fourth end arm (27d') along said first direction (Y).

8. The sensor of claim 7, **characterized in that** said first electrically conductive coil (22a') and said second electrically conductive coil (22b') are wound parallel to said first direction (Y); and/or **characterized in that** said first excitation circuit (12) comprises a third electrically conductive coil (21') wound parallel to said first direction (Y).

9. The sensor of any one of the foregoing claims, **characterized in that** said mangetizable element (11) is a ferromagnetic material.

10. The sensor of any one of the foregoing claims, **characterized by** comprising a control unit (30), which is programmed to receive in input said induced voltage (Vo1(t), Vo2(t)) and to provide in output an indication of said level.

11. The sensor of claim 10, when depending on claims 4 to 8, **characterized in that** said control unit (30) is programmed:
- to receive in input said first induced voltage (Vo1(t)) and said second induced voltage (Vo2(t)); and
- to elaborate said first induced voltage (Vo1(t)) and said second induced voltage (Vo2(t)) to calculate a quantity associated to said level.

12. A packaging machine (1) for forming a plurality of sealed packages from a tube (3) of packaging material, comprising:
- forming means (4) interacting with said tube (3) to form said packages;
- a fixed support structure (15); and
- a sensor (10, 10') according any one of the foregoing claims.

13. The packaging machine of claim 12, **characterized in that** said first electric circuit (12) and said second electric circuit (13) are fitted to said fixed support structure (15) .

14. A method for detecting the level of a pourable food product inside a tube (3) of packaging material, comprising the step of
i) arranging a floater (7) adapted to float on the pourable food product inside said tube (3);
said method further comprising the steps of:
ii) generating a magnetic field (B), by means of a first excitation electric circuit (12) ;
iii) concentrating said magnetic field (B), by means of a magnetic field flux concentrator element (11) coupled to said floater (7); and
iv) inducing at least one voltage (Vo1(t); Vo2(t)) inside a second electric circuit (13) magnetically coupled with said magnetic filed (B) by means of a time-variation of a magnetic flow generated by said magnetic field (B);
said at least one voltage (Vo1(t); Vo2(t)) being associated to said level.

15. The method of claim 14, **characterized in that** said step of iv) inducing at least one voltage (Vo1(t); Vo2(t)) comprises the steps of:
v) inducing a first voltage (Vo1(t)) inside a first electrically conductive coil (22a, 22a') of said second electric circuit (13); and
vi) inducing a second voltage (Vo2(t)) inside a second electrically conductive coil (22b, 22b') of said second electric circuit (13) ;
said first electrically conductive coil (22a, 22a') and said second electrically conductive coil (22b, 22b') being electrically distinct from one another.

16. The method of claim 14 or 15, **characterized by** comprising the step of:
vii) calculating a quantity associated to said level on the basis of said at least one voltage (Vo1(t); Vo2(t)).

17. The method of claim 16, when depending on claim 15, **characterized in that** said step of vii) calculating a quantity associated to said level comprises the step of
viii) elaborating the time variation of a signal formed by the combination of the time variation of said first induced voltage (Vo1(t)) and the time variation of second induced voltage (Vo2(t)) to calculate said level.

18. A method for forming a plurality of sealed packages, comprising the steps of:
ix) forming said packages from a tube (3) of packaging material; and
x) detecting the level of a pourable food product inside said tube (3), according to any one of claims 14 to 17.
